# EUROPÄISCHE PATENTSCHRIFT

(11) **EP 3 915 393 B1**
(45) Veröffentlichungstag und Bekanntmachung des Hinweises auf die Patenterteilung: **26.07.2023**
(21) Anmeldenummer: 20177511.1
(22) Anmeldetag: 29.05.2020
(51) Int. Cl.: A23L 2/54, F25D 31/00, B67D 1/08, A47J 31/00, B67D 1/00

(54) **TANKSYSTEM ZUR KÜHLUNG EINER FLÜSSIGKEIT MIT THERMISCHER SCHICHTUNG**
TANK SYSTEM FOR COOLING A LIQUID WITH THERMAL STRATIFICATION
SYSTÈME DE RÉSERVOIR PERMETTANT DE REFROIDIR UN LIQUIDE PAR STRATIFICATION THERMIQUE

(43) Veröffentlichungstag der Anmeldung: 01.12.2021
(73) Patentinhaber: Aquis Systems AG, 9445 Rebstein (CH)
(72) Erfinder: Wawrla, Andreas, CH 9445 Rebstein (CH)
(74) Vertreter: Otten, Roth, Dobler & Partner mbB Patentanwälte

(56) Entgegenhaltungen:
- WO-A1-2018/214129
- WO-A1-2018/214130
- CN-U- 205 856 155

## Beschreibung

Die Erfindung betrifft ein Tanksystem zur Kühlung, Lagerung und Entnahme einer Flüssigkeit nach dem Oberbegriff des Anspruchs 1.

Aus dem Stand der Technik ist beispielsweise aus der CN 205856155 U ein Tanksystem zur Kühlung, Lagerung und Entnahme von Flüssigkeiten bekannt, welches im Speziellen ein System zur Herstellung von gekühltem Sodawasser bzw. karbonisiertem Wasser bereitstellt.

Aus der WO 2018/214130 A1 und der WO 2018/214129 A1 sind Tanksysteme zur Kühlung, Lagerung und Entnahme von kohlensäurehaltiger Flüssigkeiten bekannt, mit einem Kaltwassertank zur Kühlung von Wasser und einem Sodawassertank zur Karbonisierung von Wasser.

Die meisten Tanks zur Kühlung, Lagerung und Entnahme von Flüssigkeiten werden von oben und zentral befüllt. Dabei wird die einströmende Flüssigkeit meist direkt in den Tank eingeleitet.

Aufgabe der Erfindung ist es, ein verbessertes Tanksystem zur Kühlung, Lagerung und Entnahme einer Flüssigkeit bereitstellen zu können, aus dem möglichst viel bzw. lange gekühlte Flüssigkeit entnommen werden kann, weil sich die nachfliessende, ungekühlte Flüssigkeit möglichst wenig mit der bereits gekühlten Flüssigkeit durchmischt und diese dadurch erwärmt. Zudem soll die Erfindung diesen erfindungsgemässen Effekt auch bei einem Tank-in-Tank-System ermöglichen.

Die Aufgabe wird, ausgehend von einem Tanksystem der eingangs genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Das erfindungsgemäße Tanksystem dient zunächst zur Kühlung einer Flüssigkeit, bei der es sich insbesondere um Wasser, vor allem Trinkwasser bzw. Mineral- oder Tafelwasser handeln kann. Diese Flüssigkeit kann in einem Tank des Tanksystems zwischengelagert, gekühlt und anschließend entnommen werden. In dem eigentlichen Tank als Behälter zur Lagerung der Flüssigkeit befindet sich ein Volumen, welches sich entlang einer Schichtungsachse des Tanks erstreckt. In der Regel verläuft die Schichtungsachse etwa senkrecht zur Flüssigkeitsoberfläche und damit in der Regel parallel zur Schwerkraftrichtung. Im Allgemeinen kann somit bei Lagerung der Flüssigkeit entlang der Schichtungsachse eine thermische Schichtung der Flüssigkeit im Tank hergestellt werden; d. h., dass die Flüssigkeit sich im Tank so verteilt, dass sich kalte Flüssigkeit im unteren Bereich des Tanks ablagert, während wärmere Flüssigkeit tendenziell nach oben steigt.

Der Tank kann z.B. ein Volumen mit länglicher Form aufweisen, welches stehend (Längsachse vertikal ausgerichtet) oder liegend (Längsachse horizontal ausgerichtet) ausgerichtet ist. Im dynamischen Fall, bei dem eine Entnahme gleichzeitig zur Befüllung stattfindet, kann die Schichtungsachse auch abweichend von der Schwerkraftrichtung ausgerichtet sein.

Der vorliegende Tank ist durch eine Füllvorrichtung befüllbar, welche wiederum einen Fülleinlass, aus dem die Flüssigkeit in den Tank einströmen kann, aufweist.

Der Tank kann zum Beispiel in einer Ausrichtung der Schichtungsachse parallel zur Schwerkraftrichtung befüllbar sein. Der Fülleinlass weist dann z.B. in Schwerkraftrichtung nach unten In diesem Fall kann dem Fülleinlass eine Umlenkvorrichtung nachgeschaltet sein.

Im Allgemeinen befindet sich der Fülleinlass im Bereich der Flüssigkeitsoberfläche oder über der Flüssigkeitsoberfläche, insbesondre im vollständig gefüllten Zustand bzw. im Zustand, in dem der Tank einen maximal vorgesehenen Füllstand aufweist.

Wird die Flüssigkeit im Tank gekühlt, so stellt sich zumindest nach einer gewissen Zeit eine thermische Schichtung ein, da kaltes Wasser eher in Richtung Boden strömt und warmes Wasser eher nach oben. Neue ungekühlte Flüssigkeit wird über den Fülleinlass in den Tank dann nachgefüllt, wenn gekühlte Flüssigkeit aus dem Tank entnommen wird. Zweck des Tanksystems ist es, dass die entnommene Flüssigkeit möglichst lange eine konstant tiefe Temperatur besitzt. Die Erfindung macht es sich zunutze, dass es hierzu grundsätzlich vorteilhaft ist, die gekühlte Flüssigkeit an dem dem Einlass gegenüberliegenden Ende der Schichtungsachse, z.B. am Boden des Tanks zu entnehmen, da in diesem Bereich die Wahrscheinlichkeit, kalte Flüssigkeit anzutreffen, am größten ist.

Da der Zeitpunkt der Entnahme im Allgemeinen beliebig sein kann, soll zu beliebiger Zeit gekühlte Flüssigkeit grundsätzlich entnehmbar sein.

Das erfindungsgemäße Tanksystem zeichnet sich nun dadurch aus, dass der Effekt einer thermischen Schichtung im Lagerungsvolumen bei Nachfüllung des Tanks konsequent herbeigeführt, möglichst lange aufrecht erhalten und gezielt ausgenutzt wird. Um dies zu erreichen, wird erfindungsgemäß bewirkt, dass beim Nachfüllen von ungekühlter Flüssigkeit in den Tank möglichst keine Durchwirbelung bzw. Durchmischung der neu einströmenden ungekühlten Flüssigkeit mit der bereits im Tank befindlichen und mehr oder weniger gekühlten Flüssigkeit stattfindet. Dadurch kann der Zustand einer thermischen Schichtung im Tank bei Nachfüllung von ungekühlter Flüssigkeit bestmöglich aufrechterhalten werden. Auf diese Weise kann in vorteilhafter Art ermöglicht werden, dass möglichst viel gekühltes Wasser bzw. gekühlte Flüssigkeit mit einer möglichst konstant tiefen Kühltemperatur entnommen werden kann.

Dementsprechend wird gemäß der Erfindung die Maßnahme ergriffen, technisch beim Nachfüllung des Tanks eine Durchmischung der Flüssigkeit innerhalb des Tanks, durch welche eine thermische Schichtung zerstört werden kann, zu vermeiden. Grundsätzlich ist es vorteilhaft, Flüssigkeit von oben in Schwerkraftrichtung gesehen in den oberen Bereich der Flüssigkeitsschichten einzuleiten. Wird jedoch die Flüssigkeit unkontrolliert in den Tank eingeleitet, so kann es zu Verwirbelungen kommen, die eine Durchmischung der Flüssigkeitsschichtung zur Folge haben.

Hierzu ist entweder im Tank unterhalb des Fülleinlasses eine Umlenkvorrichtung zur Verhinderung der Durchmischung der Flüssigkeit durch Umlenkung der über den Fülleinlass zugeführten Flüssigkeit in eine Strömung mit einer Komponente, die in einer Ebene senkrecht Schichtungsachse verläuft, etwa mit waagerechter Komponente vorgesehen.

Optional kann stattdessen auch gleich die Flüssigkeit über den Fülleinlass mit wenigstens einer waagerechten Komponente, parallel zur Flüssigkeitsoberfläche direkt eingeleitet werden.

Der Auslass wiederum ist entlang der Schichtungsachse auf der gegenüberliegenden Seite des Einlasses angeordnet, sodass die thermische Schichtung ausgenutzt werden kann und gerade nicht die neu eingelassene Flüssigkeit über den Auslass unmittelbar gefördert wird. In der Regel kann, und zwar bei einer vertikal ausgerichteten Schichtungsachse, der Einlass somit im oberen Tankbereich angeordnet sein, während der Auslass im unteren Bereich angeordnet ist. Grundsätzlich kann, z.B. bei dynamischer Befüllung und gleichzeitiger Entnahme, die Schichtungsachse aber auch von einer vertikalen Ausrichtung abweichen, sodass Einlass und Auslass auch horizontal zueinander versetzt angeordnet sein können.

Durch diese Maßnahmen kann eine vollständig waagerechte Strömung bzw. eine Strömung in einer Ebene senkrecht zur Schichtungsachse erzeugt werden, sodass die Strömung tangential zu einem Kreisbogen in dieser Ebene um die Schichtungsachse verläuft. Das Einströmen der zugeführten Flüssigkeit provoziert insofern zunächst keine Strömungen in vertikaler bzw. in Schwerkraftrichtung, wodurch die thermische Schichtung entlang der Schichtungsachse durcheinandergebracht werden würde.

Da sich die einströmenden Flüssigkeitsmengen zunächst waagerecht bewegen, können sich zwar Strömungen bzw. Wirbel bilden, welche zunächst primär jedoch auch in einer waagerechten Ebene verlaufen. Die Flüssigkeit bewegt sich mit Blickrichtung parallel zur Schichtungsachse im Kreis. Erst als Folge dieser Strömung kann es zum Teil auch zu einer Beeinflussung der thermischen Schichtung in vertikaler Richtung kommen. Dieser Effekt ist im Allgemeinen jedoch wesentlich geringer als bei vertikaler Einströmung der Flüssigkeit in den Tank.

Um eine Wirbelbildung noch stärker zu unterdrücken, kann die eingeleitete Flüssigkeit in zwei oder mehr Teilströmungen aufgeteilt werden. Fließen diese entgegensetzt, können diese zum Beispiel entlang der Oberfläche entgegengesetzt drehende Störmungen ausbildet, die sich teilweise gegenseitig aufheben. Wirbel, die eine Durchmischung begünstigen würden, können somit unterdrückt werden.

Der erfindungsgemäße Effekt, der die bestehende thermische Schichtung aufrecht erhält und Verwirbelungen bzw. Durchmischungen vermeidet, wirkt sich nicht nur auf die statische thermische Schichtung aus, die sich durch die natürliche Konvektion ergibt, sondern wird auch für den dynamischen Fall angewandt, die vor allem beim Zapfen der Flüssigkeit und somit beim Nachfüllen des Tanks von Bedeutung ist. Bei diesem Vorgang vermeidet die Erfindung die Durchmischung von einströmender ungekühlter und der bereits im Tank befindlichen gekühlten Flüssigkeit. Es ist für die Bereitschaft, möglichst lange gekühltes Wasser zur Verfügung zu halten, vorteilhaft, diese Schichtung solange wie möglich aufrecht zu erhalten.

Wird gekühltes Wasser entnommen, kann im oberen Bereich wieder Wasser zugeführt werden, um den Tank aufzufüllen. Die Menge des zugeführten Wassers kann sich danach richten, wie viel gekühltes Wasser entnommen wurde. Im Tank wird das Wasser grundsätzlich gekühlt. Befindet sich das im Tank bevorratete Wasser bereits seit einer gewissen Zeit darin, ist im Allgemeinen davon auszugehen, dass das Wasser insgesamt eine einheitlichere Temperatur aufweist als wenn gerade erst Wasser nachgefüllt wurde. Eine thermische Schichtung kann grundsätzlich jedoch stets vorliegen. Die Temperaturunterschiede innerhalb der thermischen Schichtung können aber variieren, je nachdem, ob gerade erst Wasser nachgefüllte wurde, das erst noch gekühlt wird, oder ob sich das Wasser schon länger im Tank befindet und eine Kühlung und bereits abgekühlt worden ist.

Aufgrund der thermischen Schichtung kann aber zumindest stets eine gewisse Menge an gekühltem Wasser entnommen werden.

Im Grunde kann die Schichtung vorteilhafterweise sogar so lange erhalten bleiben, bis idealerweise alles gekühlte Wasser entnommen ist, sodass das gezapfte Wasser auch annähernd eine konstante tiefe Temperatur besitzen kann.

Ist der Tank jedoch vollständig entleert, muss das Kühlaggregat gegebenenfalls die nachgefüllte wärmere Flüssigkeit wieder kühlen.

Wird nur ein Teil der gekühlten Flüssigkeit im Tank entnommen, ist eine thermische Schichtung durch die Erfindung auch vorteilhaft, weil diese durch die natürliche Konvektion dann eher erhalten bleibt. Dies wiederum bedeutet, das in dem Fall, dass erneut wieder gekühlte Flüssigkeit entnommen werden soll, auch weiterhin gekühlte Flüssigkeit entnommen werden kann und die bereits am stärksten heruntergekühlten Wassermengen nicht direkt mit nachgefüllter Flüssigkeit durchmischt werden, denn somit wäre die zu entnehmende Flüssigkeit durch die Durchmischung erwärmt worden.

Wird Flüssigkeit in den Tank nachgefüllt, so wird diese im Tank wiederum durch ein entsprechendes Kühlsystem nach und nach heruntergekühlt.

Die Umlenkvorrichtung zeichnet sich insbesondere dadurch aus, dass sie im Grunde ein rein mechanisches Mittel darstellt und ohne größeren Aufwand realisiert und auch in bestehende Tanksysteme nachgerüstet werden kann. Darüber hinaus kann der Strömungsverlauf so bestimmt werden, dass, auch angepasst an grundsätzlich alle möglichen Tankformen, eine Durchmischung und Zerstörung der thermischen Schichtung minimierbar ist. Zudem kann durch die Umlenkvorrichtung aber auch ein Teil der kinetischen Energie der einzuleitenden Flüssigkeit, die auf die Umlenkvorrichtung triff und diese durchfließen muss, aufgebraucht, sodass eine Wirbelbildung und Durchmischung noch stärker unterdrückt werden kann.

In vorteilhafter Weise ist bei einem Ausführungsbeispiel der Erfindung die Umlenkvorrichtung radial zur Schichtungsachse versetzt angeordnet. Da die Umlenkvorrichtung eine Strömung mit einer deutlich waagerechten Komponente ausbildet, ist es vorteilhaft, dass diese Strömung zum Zentrum bzw. zur Schichtungsachse versetzt, zum Beispiel entlang der Wandung des Tanks um die Schichtungsachse herum über eine möglichst lange Strecke zur Vermeidung von Turbulenzen bzw. Wirbeln verlaufen kann. Auf diese Weise kann vermieden werden, dass die Flüssigkeit etwa frontal auf die Wandung trifft, wodurch die Wirbelbildung begünstigt werden könnte. Dies wird vor allem gemäß der Ausführungsvariante dadurch erleichtert, dass die Umlenkvorrichtung entsprechend radial zur Schichtungsachse versetzt ist, also nicht im Zentrum unmittelbar angeordnet ist, und die Flüssigkeit sich somit über eine möglichst große Strecke bewegen kann, ohne frontal gegen eine Wandung zu stoßen und zu verwirbeln.

Um den Weg der zugeführten Flüssigkeit zu erhöhen und somit ein Spritzen der Flüssigkeit oder sonstige Turbulenzen zu vermeiden, kann die Umlenkvorrichtung einen Kreisbogen und die Schichtungsachse herum ausbilden, dem das zugeführte Wasser entsprechend folgen muss. Insbesondere kann somit die Wegstrecke, auf der die strömende Flüssigkeit ihre kinetische Energie abgibt, maximiert werden.

Insbesondere kann bei einer Ausführungsvariante der Erfindung der Fülleinlass ebenfalls radial versetzt zur Schichtungsachse in die Umlenkvorrichtung einmünden. Auch wenn die Flüssigkeit über das Zentrum im Bereich der Schichtungsachse in den Tank eingebracht wird, kann sie in radialer Richtung zum Rand des Tanks hin geleitet werden, bevor sie in die Umlenkvorrichtung bzw. zu der im Tank bevorrateten Flüssigkeit gelangt. Grundsätzlich können im Übrigen Füllvorrichtung und Umlenkvorrichtung auch als ein Bauteil ausgebildet sein. Ferner kann die Umlenkvorrichtung auch im oberen Bereich geöffnet sein, während sich der Fülleinlass unmittelbar über dieser Öffnung befindet, sodass die Flüssigkeit von oben in die Umlenkvorrichtung einfließen kann.

Die Umlenkvorrichtung weist erfindungsgemäß zur Herstellung einer Strömung, die vollständig oder im Wesentlichen in einer Ebene senkrecht zur Schichtungsachse verläuft, einen seitlichen Einlass oder grundsätzlich auch mehrere seitliche Einlässe auf, aus dem / denen die Flüssigkeit aus der Umlenkvorrichtung herausströmt. In vorteilhafter Weise ist die Umlenkvorrichtung so ausgebildet, dass sich die Flüssigkeit nach Ausströmen aus dem Fülleinlass eine Zeitlang in einer definierten Weise in einem vorgegebenen Kanal der Umlenkvorrichtung bewegt, sodass keine Turbulenzen entstehen, sondern besonders bevorzugt sich eine laminare oder zumindest annähernd laminare Strömung ausbilden kann. Insbesondere dann, wenn die Umlenkvorrichtung annähernd kreisbogenförmig verläuft, können die Einlässe aus der Umlenkvorrichtung als Tangentialeinlässe ausgebildet werden. Grundsätzlich genügt ein Einlass an der Umlenkvorrichtung. Bei einer Kreisbogenform der Umlenkvorrichtung können auch zu beiden Seiten des kreisrunden Elements jeweils Tangentialeinlässe vorgesehen sein. Die Wahl, wie viele Tangentialeinlässe vorgesehen sind, kann insbesondere auch davon abhängen, wie die Geometrie und die Größe des Tanks aussehen. Zwei gegenläufig angeordnete Tangentialeinlässe können zum Beispiel dann vermieden werden, wenn der Tank hinsichtlich seines Durchmessers vergleichsweise klein ausgebildet ist und die durch die Tangentialeinlässe bewirkten Strömungen dann aufeinanderprallen, sodass hierdurch Turbulenzen erzeugt werden. Es ist auch denkbar, dass gerade zwei Einlässe dafür sorgen, dass die Strömung insgesamt abgeschwächt wird und somit eine Durchmischung der thermischen Schichtung noch effizienter vermieden werden kann.

Der Fülleinlass ist so positioniert, dass er Flüssigkeit an die Umlenkvorrichtung abgeben kann. Er kann zum Beispiel so angeordnet werden, dass die Umlenkvorrichtung von der Flüssigkeit aus der Füllvorrichtung in unterschiedlichen Abschnitten der Umlenkvorrichtung in entgegengesetzter Richtung durchflossen wird. Denkerbar ist grundsätzlich auch, dass der Fülleinlass an einem Ende der Umlenkvorrichtung vorgesehen ist und die Flüssigkeit somit insgesamt eine möglichst große Strecke in einer Richtung durch die Umlenkvorrichtung fließen kann, was gegebenenfalls dazu beiträgt, eine möglichst laminare Strömung ausbilden zu können.

Um eine möglichst waagerechte Strömung zu erzeugen, kann die Umlenkvorrichtung selbst im Wesentlichen waagerecht bzw. in einer Ebene senkrecht zur Schichtungsachse angeordnet und ausgerichtet sein. Dies gilt insbesondere für den Leitungsweg, den die Umlenkvorrichtung als solche ausbildet. Ein vergleichsweise einfacher Aufbau der Umlenkvorrichtung besteht darin, dass diese eine Grundplatte aufweist, die entsprechend waagerecht bzw. in einer Ebene senkrecht zur Schichtungsachse verläuft. Die Grundplatte verhindert, dass das Wasser bzw. die Flüssigkeit in vertikaler Richtung strömt, zumindest über einen bestimmten Bereich hinweg und leitet dieses entlang des durch die Umlenkvorrichtung vorgegebenen Wegs.

Bei einer Weiterbildung der Erfindung umfasst die Umlenkvorrichtung mindestens zwei, insbesondere einer Kreisbogenform folgende Leitelemente zum Leiten der Flüssigkeit innerhalb Vorrichtung. Diese Leitelemente können senkrecht auf der Grundplatte angeordnet sein. Die Flüssigkeit strömt somit in einer vorgegebenen Richtung. Dabei ist es besonders vorteilhaft, den Kanal des Wassers durch diese vorgegebenen Leitelemente nicht zu breit zu wählen, sodass sich vergleichsweise schnell eine annähernd laminare Strömung ausbilden kann und Verwirbelungen möglichst verhindert werden. Auf diese Art und Weise kann die bestehende thermische Schichtung möglichst lange erhalten bleiben.

Im Bereich der Tangentialeinlässe können an der Grundplatte Barriereelemente vorgesehen sein. Hierdurch wird zunächst der Strömungsquerschnitt, insbesondere beim Ausströmen in den Tank noch einmal reduziert. Durch diese Maßnahme können aber noch stärker vertikal verlaufende Strömungskomponenten abgeschwächt oder abgefangen werden, sodass insbesondere ein trichterförmiges Ausströmen der Flüssigkeit aus der Umlenkvorrichtung, welches für sich gesehen bereits vertikale Strömungskomponenten besitzt, verhindert werden kann. Durch diese Maßnahme können also Verwirbelungen reduziert werden.

Darüber hinaus können auch bei einer Ausführungsform der Erfindung noch weitere Leitelemente vorgesehen sein. Zum Beispiel können im Bereich des Tangentialeinlasses auch waagerecht angeordnete Leitelemente vorgesehen sein, um die Strömung möglichst auf eine waagerecht verlaufende Strömungskomponente zu begrenzen. Eine derartige Plattform kann beispielsweise in Schwerkraftrichtung oberhalb oder unterhalb des Tangentialausmaßes angeordnet sein derartige Plattform können somit zur Laminat ebenfalls beitragen und turbulente Strömungen vermeiden. Eine Anordnung einer derartigen Plattform oberhalb des Tangentialeinlasses in waagerechter Ausrichtung kann insbesondere auch dann ergänzend eingesetzt werden, wenn die Umlenkvorrichtung ansonsten in Schwerkraftrichtung nach oben hin offen ausgebildet ist und die Flüssigkeit von dort in die Umlenkvorrichtung eingebracht wird.

Ein Tanksystem gemäß einem Ausführungsbeispiel der Erfindung kann grundsätzlich ein oder mehrere Tanks umfassen. In vorteilhafter Weise kann zum Beispiel ein geschachtelter Aufbau vorgesehen sein, bei dem der Tank wiederum einen zusätzlichen Innentank besitzt, der vollständig in dessen Volumen aufgenommen ist. Denkbar ist auch, dass ein anderes Hohlvolumen im Inneren des Tanks angeordnet wird. In diesem Hohlvolumen können zum Beispiel auch andere Komponenten, wie zum Beispiel eine Pumpe, aufgenommen sein.

Ein vorhandener Innentank kann beispielsweise auch dazu genutzt werden, die Flüssigkeit zu behandeln, z.B. das Wasser zu karbonisieren. In vorteilhafter Weise werden Kühlung und Kanonisierung voneinander getrennt. Ohnehin würde bei der Einleitung von Gas zur Erzeugung von Sprudelwasser zum Beispiel das gesamte Volumen durchmischt werden. Darüber hinaus können in vorteilhafter Weise der Tank zur Kühlung und der Innentank zur Karbonisierung in Serie geschaltet werden, sodass bereits gekühltes Wasser in den Innentank gelangen kann, um dort schließlich karbonisiert zu werden. Somit kann gekühltes, frisch karbonisiertes Wasser anschließend aus dem Innentank entnommen werden. Der Innentank kann mittels einer Druckpumpe mit dem Wasser aus dem Tank befüllt werden. Das Kühlsystem wiederum, insbesondere die Wendel bzw. die Doppelwandung, können von einem Kältemittel durchflossen sein.

Vorzugsweise weisen Tank und Innentank eine, insbesondere um die Schichtungsachse rotationssymmetrische Form auf. Handelt es sich bei den Tank um ein hohlzylindrisches Gefäß, so kann die Strömung im Hohlzylinder um die Schichtungsachse herum wie in einen Kanal geleitet werden und vornehmlich in waagerechter Richtung fließen, während eine vertikale Durchmischung weitgehend vermieden wird.

Dazu gibt es in zweifacher Hinsicht Effekte, die gezielt ausgenutzt werden können.

Ist die Umlenkvorrichtung so ausgebildet, dass sie zwei Öffnungen in entgegengesetzter tangentialer Richtung aufweist, wird die durch den Fülleinlass einströmende Flüssigkeit in zwei Teilströme aufgeteilt, die tangential kreisförmig in unterschiedliche Richtung fliessen. Im Fluss durch den Kanal und beim anschliessenden Aufeinandertreffen der beiden Teilströme baut die einströmende Flüssigkeit kinetische Energie ab, wodurch eine Verwirbelung und Durchmischung mit der bereits im Tank befindlichen gekühlten Flüssigkeit vermieden bzw. wesentlich reduziert wird. Auf diese Weise kann erfindungsgemäss eine thermische Schichtung im Tank begünstigt und länger aufrecht erhalten werden.

Ist die Umlenkvorrichtung so ausgebildet, dass sie nur in eine Richtung eine tangentiale Öffnung aufweist, fliesst die durch den Fülleinlass einströmende Flüssigkeit im Wesentlichen tangential nur in eine Richtung bzw. kreisförmig und kann dadurch eine Rotationsbewegung der Flüssigkeit im Tank bewirken.

Darüber hinaus ist eine derartige Bauweise aber auch besonders kompakt und somit platzsparend realisierbar. Gerade bei einem modularen Aufbau kann eine solche Baugruppe als eigenständige Baueinheit behandelt werden.

Zum Kühlen des gesamten Volumens kann beispielsweise eine Kühlwendel oder eine Doppelwandung eines der Tanks vorgesehen sein. Die Wendelform begünstigt die Kühlung innerhalb des gesamten Tankvolumens, indem sie sich spiralförmig durch den gesamten Tank zieht. Die Wendel kann umspült werden, sodass die Flüssigkeit im Tankvolumen effektiv und schnell herabgekühlt werden kann. Die Wendel kann insbesondere um den Innentank herum platzsparend angeordnet werden. Ein gewisser Kühleffekt kann gleichzeitig somit auch für den Innentank erzielt werden, d. h. der Innentank wird parallel zum Volumen des Tanks mitgekühlt.

Da sich das Tanksystem besonders vorteilhaft für die Getränkezubereitung eignet, kann dieses wenigstens teilweise insbesondere aus trinkwassertauglichen Kunststoff gefertigt werden. Es ist denkbar, dass Tank bzw. Innentank aus Edelstahl gefertigt sind, während zum Beispiel Entnahmerohre, Füllvorrichtung und/oder Umlenkvorrichtung aus einem trinkwassertauglichen Kunststoff bestehen.

Bei einer besonders bevorzugten Weiterbildung der Erfindung ist die Öffnung des wenigstens einen Entnahmerohrs zur Entnahme der Flüssigkeit aus dem Tank bzw. dem Innentank im unteren Bereich des jeweiligen Tanks angeordnet, sodass möglichst kühle Flüssigkeit entnommen werden kann und die thermische Schichtung vorteilhaft ausgenutzt wird.

Darüber hinaus kann im Übrigen auch der Innentank mit einer Umlenkvorrichtung gemäß der Erfindung ausgestattet sein, sodass auch dort über längere Zeit eine thermische Schichtung erhalten bleibt. Dies kann gegebenenfalls auch davon abhängen, welche Art der Aufbereitung im Innentank durchgeführt wird.

### Ausführungsbeispiel

Ein Ausführungsbeispiel der Erfindung ist in den Zeichnungen dargestellt und wird nachstehend unter Angabe weiterer Einzelheiten und Vorteile näher erläutert. Im Einzelnen zeigen:
- Figur 1:: eine schematische Darstellung des Tanksystems gemäß der Erfindung,
- Figur 2:: eine schematische Darstellung der Umlenkvorrichtung für ein Tanksystem gemäß der Erfindung, sowie
- Figur 3:: eine schematische Darstellung einer Strömungssituation mit einer Umlenkvorrichtung, die hier in Innentank angeordnet ist.

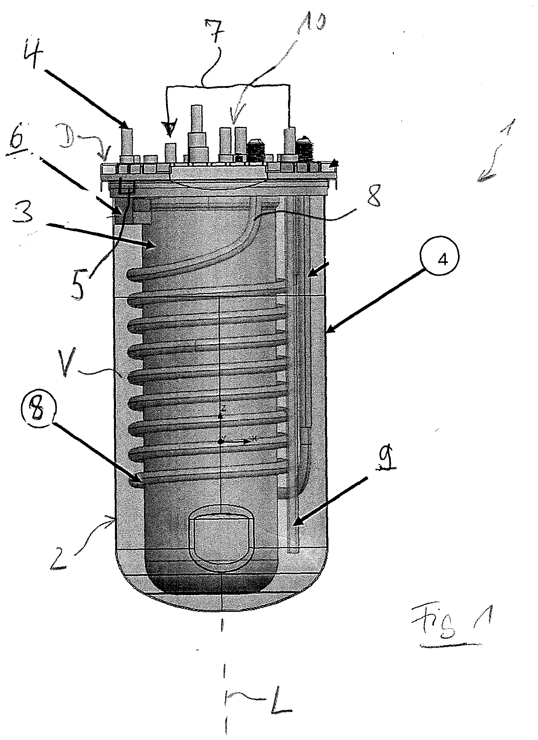

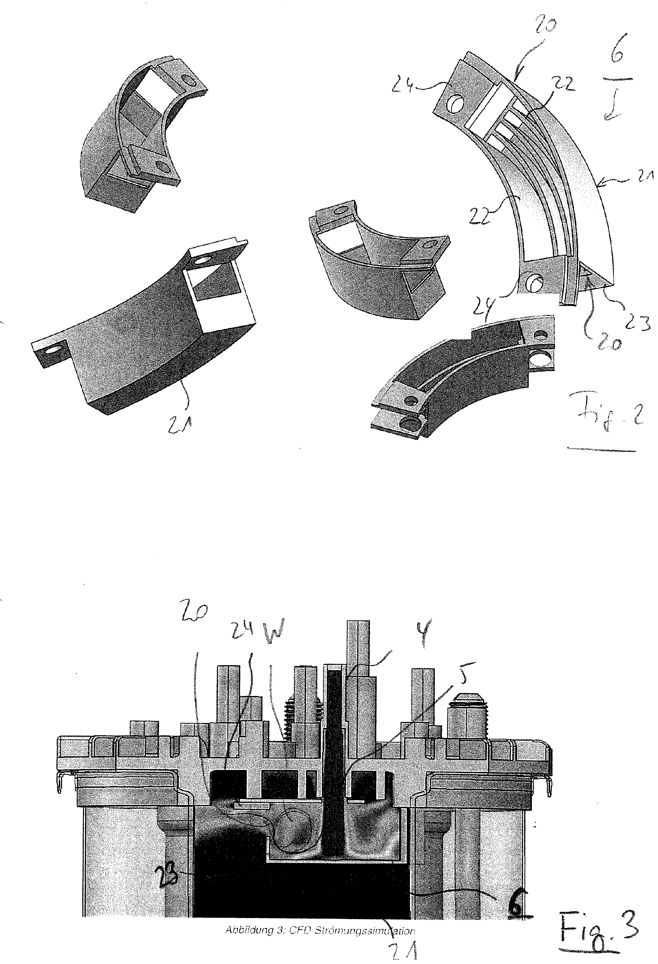

Figur 1 zeigt ein Tanksystem 1 mit einem Tank 2, in dessen Volumen ein Innentank 3 angeordnet ist. Der Tank 2 dient zunächst zur Kühlung von Wasser, welches über die Füllvorrichtung 4 deckelseitig über den Deckel D im oberen Bereich des Tanks 2 eingeleitet wird. Die Füllvorrichtung 4 umfasst ein Rohr, das gegenüber der Schichtungsachse L radial zur Wandung des Tanks 2 hin verschoben ist. Dieses Rohr der Füllvorrichtung 4 umfasst einen Fülleinlass 5, der in eine Umlenkvorrichtung 6 mündet. Diese Umlenkvorrichtung 6 erstreckt sich kreisbogenförmig entlang der Wandung des Tanks 2 und wird im Detail im Zusammenhang mit Figur 2 beschrieben.

Das Volumen V des Tanks 2 bildet einen Hohlzylinder, welcher den Innentank 3 umgibt. Um den Innentank 3 herum ist eine Kühlwendel 8 angeordnet. Ferner ist ein Entnahmerohr 9 vorgesehen, welches als Lanze ausgebildet ist und vom Deckel D durch das Volumen V bis in den unteren Bereich des Tanks 2 vordringt. Somit kann der Tank 2 und das Tanksystem 1 von einer thermischen Schichtung profitieren, wenn die zu kühlende Flüssigkeit über die Wendel 8 fortwährend gekühlt wird und sich dabei gekühltes Wasser jedoch im unteren Bereich vornehmlich absetzt, sodass über die Lanze 9 auch entsprechend gekühltes Wasser entnommen werden kann.

Das gekühlte Wasser wird über das Entnahmerohr 9 und die Leitung 7 schließlich in den Innentank 3 geführt. Dieser besitzt Anschlüsse 10, mit denen Kohlendioxid in den ihnen Tank geleitet werden kann, um das Wasser zu karbonisieren. Das Entnahmerohr 9 und auch die Füllvorrichtung 4 können aus einem trinkwassertauglichen Kunststoff ausgebildet sein, der zudem zur Unterstützung der Kühlung thermisch leitfähig ist.

In Figur 2 ist die Umlenkvorrichtung 6 dargestellt, die als kreisbogenförmiges Element ausgebildet ist. Sie besitzt im vorliegenden Fall zwei Tangentialeinlässe 20, die an den Enden des Kreisbogenabschnittes angeordnet sind. Im in Schwerkraftrichtung oberen Bereich ist die Umlenkvorrichtung 6 offen ausgebildet. Im unteren Bereich schließt die Umlenkvorrichtung mit einer Grundplatte 21 ab. Senkrecht zur Grundplatte 21 stehen Leitelemente 22, welche der Kreisbogenform folgen und das Wasser kanalartig leiten können. Unter den Tangentialeinlässen 20 sind Barrieren 23 angeordnet, welche den Einlass-Querschnitt noch einmal reduzieren, sodass das Wasser möglichst waagerecht über die Tangentialauslässe austreten kann. Zur Unterstützung der Laminarisierung sind horizontal verlaufende Leitplattformen 24 oberhalb der Tangentialauslässe 20 angeordnet.

In Figur 3 ist eine Füllvorrichtung 4, jedoch für ein Innentank 7 dargestellt, wobei die Füllvorrichtung 4 in einen Fühleinlass 5 mündet, der wiederum unmittelbar oberhalb der Umlenkvorrichtung 6 angeordnet ist. Bei dieser Vorrichtung bilden sich Wirbel W ausschließlich im Inneren der Umlenkvorrichtung 6, und das Wasser strömt im Wesentlichen waagerecht über die Tangentialeinlasse 20 aus. Auch hier sind im Bereich des Tangentialauslasses 20 eine Grundplatte 21 und eine Barrieren 23 vorgesehen, die wiederum durch horizontale Leitplattform 24 ergänzt wird. Durch die im Wesentlichen waagerechte Strömung des eingeleiteten Wassers kann somit eine Durchmischung der thermischen Schichtung vermieden werden, und es wird erleichtert, dass stets kaltes Wasser im unteren Bereich des Tanks zur Entnahme zur Verfügung steht.

### Bezugszeichen:

- 1: Tanksystem
- 2: Tank
- 3: Innentank
- 4: Füllvorrichtung
- 5: Fülleinlass
- 6: Umlenkvorrichtung
- 7: Leitung
- 8: Kühlwendel
- 9: Entnahmerohr / -lanze
- 10: Karbonisierung / CO₂-Zufuhr
- 20: Tangentialeinlass
- 21: Grundplatte
- 22: Leitelement
- 23: Barriereelement
- 24: horizontale Plattform
- D: Deckel
- L: Schichtungsachse
- V: Tankvolumen
- W: Wirbel

## Patentansprüche

1. Tanksystem (1) zur Kühlung, Lagerung und Entnahme einer Flüssigkeit, umfassend einen Tank (2) zum Kühlen der Flüssigkeit und Lagern der Flüssigkeit in einem Volumen (V) entlang einer Schichtungsachse (L) des Volumens (V), sodass insbesondere zumindest teilweise entlang der Schichtungsachse (L) eine thermische Schichtung der Flüssigkeit im Tank (2) herstellbar ist, wobei der Tank (2) durch eine Füllvorrichtung (4) mit einem Fülleinlass (5) in einem Einlassbereich entlang der Schichtungsachse (L) befüllbar und über einen Auslass in einem dem Einlassbereich entlang der Schichtungsachse (L) entgegengesetzten Auslassbereich entleerbar ist, wobei im Tank (2) zur Verhinderung der Durchmischung der Flüssigkeit im Volumen (V) entlang der Schichtungsachse (L) die Füllvorrichtung dazu ausgebildet ist, die Flüssigkeit in wenigstens eine Strömung, welche vollständig oder teilweise in einer Ebene senkrecht zur Schichtungsachse (L) verläuft, zu leiten und der im Tank (2) bevorrateten Flüssigkeit zuzuführen, sodass die Strömung tangential zu einem Kreisbogen, der in einer Ebene senkrecht zur Schichtungsachse (L) verläuft, **dadurch gekennzeichnet, dass**:
• die Füllvorrichtung unterhalb des Fülleinlasses (5) eine Umlenkvorrichtung (6) zum Umlenken der aus dem Fülleinlass austretenden Flüssigkeit in eine Strömung, die wenigstens teilweise senkrecht zur Schichtungsachse (L) verläuft, insbesondere mit waagrechter Komponente und/oder eine vollständig waagrechte Strömung, wobei insbesondere der Tank über den Fülleinlass (5) von oben mit einer Komponente oder vollständig parallel zur Ausrichtung der Schichtungsachse (L) befüllbar ist, wobei die Umlenkvorrichtung zur Herstellung einer Strömung , die vollständig oder im Wesentlichen in einer Ebene senkrecht zur Schichtungsachse verläuft, wenigstens einen seitlichen Einlass aufweist, aus dem bzw. denen die Flüssigkeit aus der Umlenkvorrichtung herausströmt und wobei die Umlenkvorrichtung (6) einen Tangentialeinlass (20) oder zwei Tangentialauslässe (20) aufweist:

2. Tanksystem (1) nach Anspruch 1, **dadurch gekennzeichnet, dass** die Füllvorrichtung und/oder die Umlenkvorrichtung dazu ausgebildet ist, die Flüssigkeit in wenigstens zwei Strömungen aufzuteilen, welche in jeweils unterschiedlicher Richtung, insbesondere in einander entgegengesetzter Richtung fließen und der im Tank (2) bevorrateten Flüssigkeit zugeführt werden, sodass bevorzugt eine Wirbelbildung vermieden werden kann.

3. Tanksystem (1) nach einem der vorgenannten Ansprüche, **dadurch gekennzeichnet, dass** die Umlenkvorrichtung (6) radial zur Schichtungsachse (L) versetzt angeordnet ist.

4. Tanksystem (1) nach einem der vorgenannten Ansprüche, **dadurch gekennzeichnet, dass** die Umlenkvorrichtung (6) einen Kreisbogen um die Schichtungsachse (L) ausbildet.

5. Tanksystem (1) nach einem der vorgenannten Ansprüche, **dadurch gekennzeichnet, dass** der Fülleinlass (5) radial versetzt zur Schichtungsachse (L) in die Umlenkvorrichtung (6) mündet.

6. Tanksystem (1) nach einem der vorgenannten Ansprüche, **dadurch gekennzeichnet, dass** die Umlenkvorrichtung (6) so zum Fülleinlass (5) angeordnet ist, dass sie von der Flüssigkeit aus der Füllvorrichtung (4) in unterschiedlichen Abschnitten der Umlenkvorrichtung (6) in entgegengesetzter Flussrichtung durchflossen wird.

7. Tanksystem (1) aus einem der vorgenannten Ansprüche, **dadurch gekennzeichnet, dass** die Umlenkvorrichtung (6):
• waagerecht und/oder in einer Ebene senkrecht zur Schichtungsachse (L) angeordnet ist und/oder
• eine waagerecht und/oder in einer Ebene senkrecht zur Schichtungsachse (L) angeordnete Grundplatte (21) aufweist.

8. Tanksystem (1) aus einem der vorgenannten Ansprüche, **dadurch gekennzeichnet, dass** die Umlenkvorrichtung (6) wenigstens zwei, im Besonderen der Kreisbogenform folgende Leitelemente (22) zum Leiten der Flüssigkeit innerhalb der Umlenkvorrichtung (6) aufweist, wobei die Leitelemente (22) vorzugsweise senkrecht zur Grundplatte (21) angeordnet sind.

9. Tanksystem (1) aus einem der vorgenannten Ansprüche, **dadurch gekennzeichnet, dass** die Umlenkvorrichtung (6):
• an wenigstens einem der Tangentialeinlässe (20) jeweils ein grundplattenseitiges Barriereelement (23) zur Durchmischung der Flüssigkeit im Inneren der Umlenkvorrichtung (6) angeordnet sind und/oder
• wenigstens eine horizontale Plattform (24) zur Laminarisierung und vertikalen Auffächerungen der Flüssigkeit an wenigstens einem der Tangentialeinlässe aufweist.

10. Tanksystem (1) nach einem der vorgenannten Ansprüche, **dadurch gekennzeichnet, dass** der Tank (2)ein Hohlvolumen ausbildet.

11. Tanksystem (1) nach einem der vorgenannten Ansprüche, **dadurch gekennzeichnet, dass** der Tank (2):
• einen Innentank (3), insbesondere zur Karbonisierung der im Tank gekühlten Flüssigkeit, umfasst, der vorzugsweise vollständig im Volumen (V) des Tanks (2) aufgenommen ist,
• wobei insbesondere der Tank (2) und/oder der Innentank (3) eine, insbesondere um die Schichtungsachse (L), rotationssymmetrische Form aufweisen.

12. Tanksystem (1) nach Anspruch 11, **dadurch gekennzeichnet, dass** um den Innentank (3) ein Kühlsystem, insbesondere als Wendelform (8) oder als Doppelwand ausgebildet, vorgesehen ist.

13. Tanksystem (1) nach einem der vorgenannten Ansprüche, **dadurch gekennzeichnet, dass** das Tanksystem (1) wenigstens teilweise aus trinkwassertauglichem Kunststoff gefertigt ist.

14. Tanksystem (1) nach einem der Ansprüche 11-13, **dadurch gekennzeichnet, dass** die Öffnung des wenigstens einen Auslasses, vorzugsweise des Entnahmerohres (9) zur Entnahme der Flüssigkeit aus dem Tank (2) und/oder dem Innentank (3) im unteren Bereich des jeweiligen Tanks (2, 3) angeordnet ist.

15. Tanksystem (1) nach einem der Ansprüche 11-14, **dadurch gekennzeichnet, dass** bei der Befüllung des Innentanks (3) eine Vorrichtung zur Beimengung eines Kohlendioxidhaltigen Gases in die Flüssigkeit vorgesehen ist.

16. Tanksystem (1) nach einem der Ansprüche 11-15, **dadurch gekennzeichnet, dass** der Tank (2) und der Innentank (3) über eines der Entnahmerohre (9) so miteinander verbunden sind, dass Flüssigkeit aus dem Tank (2) in den Innentank (3) leitbar ist.

## Claims

1. Tank system (1) for the cooling, storage and withdrawal of a liquid, comprising a tank (2) for the cooling of the liquid and storage of the liquid in a volume (V) along a stratification axis (L) of the volume (V), such that a thermal stratification of the liquid in the tank (2) can be established in particular at least partially along the stratification axis (L), wherein the tank (2) can be filled along the stratification axis (L) through a filling device (4) having a filling inlet (5) in an inlet region and can be emptied via an outlet in an outlet region that is situated opposite the inlet region along the stratification axis (L), wherein, in the tank (2), to prevent mixing of the liquid in the volume (V) along the stratification axis (L), the filling device is designed to direct the liquid into at least one flow that runs entirely or partially in a plane perpendicular to the stratification axis (L) and to feed said liquid to the liquid stored in the tank (2) such that the flow tangentially with respect to a circular arc that runs in a plane perpendicular to the stratification axis (L), **characterized in that**
• the filling device, below the filling inlet (5), a diverting device (6) for diverting the liquid that emerges from the filling inlet into a flow that runs at least partially perpendicular to the stratification axis (L), in particular with a horizontal component, and/or an entirely horizontal flow, wherein, in particular, the tank can be filled via the filling inlet (5) from above with a component parallel, or entirely parallel, to the orientation of the stratification axis (L), wherein, in order to produce a flow that runs entirely or substantially in a plane perpendicular to the stratification axis, the diverting device has at least one lateral inlet, from which the liquid flows out of the diverting device, and wherein the diverting device (6) has a tangential inlet (20) or two tangential outlets (20) .

2. Tank system (1) according to Claim 1, **characterized in that** the filling device and/or the diverting device is designed to divide the liquid into at least two flows which flow in respectively different directions, in particular in mutually opposite directions, and which are fed to the liquid stored in the tank (2) such that swirling can preferably be avoided.

3. Tank system (1) according to either of the preceding claims, **characterized in that** the diverting device (6) is arranged radially offset with respect to the stratification axis (L).

4. Tank system (1) according to one of the preceding claims, **characterized in that** the diverting device (6) forms a circular arc around the stratification axis (L).

5. Tank system (1) according to one of the preceding claims, **characterized in that** the filling inlet (5) opens into the diverting device (6) in a manner radially offset with respect to the stratification axis (L).

6. Tank system (1) according to one of the preceding claims, **characterized in that** the diverting device (6) is arranged relative to the filling inlet (5) such that liquid from the filling device (4) flows through said diverting device in opposite flow directions in different portions of the diverting device (6).

7. Tank system (1) according to one of the preceding claims, **characterized in that** the diverting device (6):
• is arranged horizontally and/or in a plane perpendicular to the stratification axis (L), and/or
• has a base plate (21) arranged horizontally and/or in a plane perpendicular to the stratification axis (L) .

8. Tank system (1) from one of the preceding claims, **characterized in that** the diverting device (6) has at least two directing elements (22), which in particular follow the circular arc shape, for directing the liquid within the diverting device (6), wherein the directing elements (22) are preferably arranged perpendicular to the base plate (21).

9. Tank system (1) according to one of the preceding claims, **characterized in that** the diverting device (6):
• at least at one of the tangential inlets (20), there are arranged in each case one base-plate-side barrier element (23) for mixing the liquid in the interior of the diverting device (6), and/or
• has at least one horizontal platform (24) for laminarizing and vertically fanning out the liquid at least at one of the tangential inlets.

10. Tank system (1) according to one of the preceding claims, **characterized in that** the tank (2) forms a hollow volume.

11. Tank system (1) according to one of the preceding claims, **characterized in that** the tank (2):
• comprises an inner tank (3), in particular for the carbonation of the liquid that is cooled in the tank, which inner tank is preferably accommodated entirely in the volume (V) of the tank (2),
• wherein, in particular, the tank (2) and/or the inner tank (3) have a rotationally symmetrical shape, in particular about the stratification axis (L).

12. Tank system (1) according to Claim 11, **characterized in that** a cooling system, in particular in the form of a coil (8) or a double wall, is provided around the inner tank (3).

13. Tank system (1) according to one of the preceding claims, **characterized in that** the tank system (1) is manufactured at least partially from plastic that is suitable for use with drinking water.

14. Tank system (1) according to one of Claims 11-13, **characterized in that** the opening of the at least one outlet, preferably of the withdrawal pipe (9) for the withdrawal of the liquid from the tank (2) and/or from the inner tank (3), is arranged in the lower region of the respective tank (2, 3).

15. Tank system (1) according to one of Claims 11-14, **characterized in that**, for the filling of the inner tank (3), a device is provided for admixing a carbon-dioxide-containing gas into the liquid.

16. Tank system (1) according to one of Claims 11-15, **characterized in that** the tank (2) and the inner tank (3) are connected to one another via one of the withdrawal pipes (9) such that liquid can be directed from the tank (2) into the inner tank (3).

## Revendications

1. Système de réservoir (1) servant au refroidissement, au stockage et au prélèvement d'un liquide, comprenant un réservoir (2) permettant de refroidir le liquide et de stocker le liquide dans un volume (V) le long d'un axe de stratification (L) du volume (V), de telle sorte qu'une stratification thermique du liquide dans le réservoir (2) puisse être produite en particulier au moins partiellement le long de l'axe de stratification (L), le réservoir (2) pouvant être rempli le long de l'axe de stratification (L) au moyen d'un dispositif de remplissage (4) présentant une entrée de remplissage (5) dans une région d'entrée et pouvant être vidé par le biais d'une sortie dans une région de sortie opposée à la région d'entrée le long de l'axe de stratification (L) et, dans le réservoir (2), pour empêcher le mélange du liquide dans le volume (V) le long de l'axe de stratification (L), le dispositif de remplissage étant réalisé pour diriger le liquide dans au moins un écoulement, lequel s'étend complètement ou partiellement dans un plan perpendiculaire à l'axe de stratification (L), et pour l'acheminer jusqu'au liquide stocké dans le réservoir (2), de telle sorte que l'écoulement tangentiel à un arc de cercle qui s'étend dans un plan perpendiculaire à l'axe de stratification (L), **caractérisé en ce que** :
le dispositif de remplissage, en dessous de l'entrée de remplissage (5), un dispositif de déviation (6) servant à dévier le liquide sortant de l'entrée de remplissage dans un écoulement qui s'étend au moins partiellement perpendiculairement à l'axe de stratification (L), en particulier avec une composante horizontale et/ou un écoulement complètement horizontal, le réservoir pouvant en particulier être rempli par le biais de l'entrée de remplissage (5) par le haut avec une composante parallèle ou complètement parallèle à l'orientation de l'axe de stratification (L), le dispositif de déviation présentant, pour produire un écoulement qui s'étend complètement ou sensiblement dans un plan perpendiculaire à l'axe de stratification, au moins une entrée latérale hors de laquelle ou desquelles s'écoule le liquide hors du dispositif de déviation et le dispositif de déviation (6) présentant une entrée tangentielle (20) ou deux sorties tangentielles (20).

2. Système de réservoir (1) selon la revendication 1, **caractérisé en ce que** le dispositif de remplissage et/ou le dispositif de déviation est/sont réalisé(s) pour diviser le liquide en au moins deux écoulements, lesquels s'écoulent dans des directions respectivement différentes, en particulier dans des directions mutuellement opposées et sont acheminés jusqu'au liquide stocké dans le réservoir (2), de telle sorte qu'une formation de tourbillons soit de préférence évitée.

3. Système de réservoir (1) selon l'une des revendications précédentes, **caractérisé en ce que** le dispositif de déviation (6) est disposé de manière décalée radialement par rapport à l'axe de stratification (L) .

4. Système de réservoir (1) selon l'une des revendications précédentes, **caractérisé en ce que** le dispositif de déviation (6) forme un arc de cercle autour de l'axe de stratification (L).

5. Système de réservoir (1) selon l'une des revendications précédentes, **caractérisé en ce que** l'entrée de remplissage (5) débouche dans le dispositif de déviation (6) de manière décalée radialement par rapport à l'axe de stratification (L).

6. Système de réservoir (1) selon l'une des revendications précédentes, **caractérisé en ce que** le dispositif de déviation (6) est disposé par rapport à l'entrée de remplissage (5) de telle sorte que le liquide provenant du dispositif de remplissage (4) s'écoule à travers ce dispositif de déviation dans des directions de flux opposées dans différentes sections du dispositif de déviation (6).

7. Système de réservoir (1) selon l'une des revendications précédentes, **caractérisé en ce que** le dispositif de déviation (6) :
est disposé horizontalement et/ou dans un plan perpendiculaire à l'axe de stratification (L) et/ou
présente une plaque de base (21) disposée horizontalement et/ou dans un plan perpendiculaire à l'axe de stratification (L).

8. Système de réservoir (1) selon l'une des revendications précédentes, **caractérisé en ce que** le dispositif de déviation (6) présente au moins deux éléments directeurs (22) suivant en particulier la forme d'arc de cercle, pour diriger le liquide à l'intérieur du dispositif de déviation (6), les éléments directeurs (22) étant disposés de préférence perpendiculairement à la plaque de base (21).

9. Système de réservoir (1) selon l'une des revendications précédentes, **caractérisé en ce que** le dispositif de déviation (6) :
au niveau d'au moins l'une des entrées tangentielles (20) sont disposés respectivement un élément barrière (23) côté plaque de base, servant au mélange du liquide à l'intérieur du dispositif de déviation (6) et/ou
présente au moins une plate-forme horizontale (24) servant à la laminarisation et à l'élargissement en éventail vertical du liquide au niveau d'au moins l'une des entrées tangentielles.

10. Système de réservoir (1) selon l'une des revendications précédentes, **caractérisé en ce que** le réservoir (2) forme un volume creux.

11. Système de réservoir (1) selon l'une des revendications précédentes, **caractérisé en ce que** le réservoir (2) :
comporte un réservoir intérieur (3), en particulier servant à la carbonatation du liquide refroidi dans le réservoir, qui est reçu de préférence complètement dans le volume (V) du réservoir (2),
en particulier le réservoir (2) et/ou le réservoir intérieur (3) présentant une forme à symétrie de révolution en particulier autour de l'axe de stratification (L).

12. Système de réservoir (1) selon la revendication 11, **caractérisé en ce qu'**un système de refroidissement, en particulier réalisé sous forme hélicoïdale (8) ou sous forme de paroi double, est prévu autour du réservoir intérieur (3).

13. Système de réservoir (1) selon l'une des revendications précédentes, **caractérisé en ce que** le système de réservoir (1) est fabriqué au moins partiellement à partir de matière synthétique appropriée à l'utilisation avec de l'eau potable.

14. Système de réservoir (1) selon l'une des revendications 11 à 13, **caractérisé en ce que** l'ouverture de l'au moins une sortie, de préférence du tube de prélèvement (9) servant au prélèvement du liquide à partir du réservoir (2) et/ou du réservoir intérieur (3), est disposée dans la région inférieure du réservoir (2, 3) respectif.

15. Système de réservoir (1) selon l'une des revendications 11 à 14, **caractérisé en ce que**, lors du remplissage du réservoir intérieur (3), un dispositif servant à l'addition dans le liquide d'un gaz contenant du dioxyde de carbone est prévu.

16. Système de réservoir (1) selon l'une des revendications 11 à 15, **caractérisé en ce que** le réservoir (2) et le réservoir intérieur (3) sont reliés l'un à l'autre par le biais de l'un des tubes de prélèvement (9) de telle sorte que le liquide puisse être dirigé à partir du réservoir (2) dans le réservoir intérieur (3).
